# EUROPÄISCHE PATENTANMELDUNG

(11) **EP 2 014 968 A1**
(43) Veröffentlichungstag der Anmeldung: **14.01.2009**
(21) Anmeldenummer: 08012050.4
(22) Anmeldetag: 03.07.2008
(51) Int. Cl.: F17C 1/16, F17C 1/06

(54) **Speicherbehälter**

(30) Priorität: 10.07.2007 DE 102007032020
(71) Anmelder: Linde Aktiengesellschaft, 80807 München (DE)
(72) Erfinder: Schuhbeck, Wilhelm, 83371 Stein (DE)
(74) Vertreter: Zahn, Christoph

(57) **Zusammenfassung**

Es wird ein Speicherbehälter, aufweisend einen Außenbehälter, einen oder mehrere, innerhalb des Außenbehälters angeordnete Innenbehälter und Zu- und Abführleitungen in den oder die Innenbehälter, beschrieben.

Erfindungsgemäß besteht der oder wenigstens einer der Innenbehälter zumindest teilweise aus einer Kohlefaser und/oder einem Kohlefaser-verstärktem Material (2, 3) und/oder ist mit einer Kohlefaser und/oder einem Kohlefaser-verstärktem Material (2, 3) verstärkt.

## Beschreibung

### Speicherbehälter

Die Erfindung betrifft einen Speicherbehälter, aufweisend einen Außenbehälter, einen oder mehrere, innerhalb des Außenbehälters angeordnete Innenbehälter und Zu- und Abführleitungen in den oder die Innenbehälter.

Gattungsgemäße Speicherbehälter werden zur Speicherung unterschiedlichster Medien, insbesondere jedoch zur Speicherung sog. kryogener Flüssigkeiten, wie beispielsweise Wasserstoff, verwendet. Sofern derartige Speicherbehälter der Speicherung kryogener Flüssigkeiten oder verflüssigter Gase, wie beispielsweise Flüssig-Stickstoff oder Flüssig-Sauerstoff dienen, ist der Raum zwischen dem Außen- und dem oder den Innenbehältern mit einer entsprechenden Vakuum(Supra)Isolierung versehen.

Die Innenbehälter derartiger Speicherbehälter sind im Regelfall vollständig aus Stahl, vorzugsweise aus CrNi-Stahl, gefertigt. Die Innenbehälter bestehen im Regelfall aus zwei gewölbten Böden sowie ein oder mehrere, den zylindrischen Teil des Innenbehälters bildende Zylinderbleche. Mittels Rund- und Längsnähten werden die Böden mit den Zylinderblechen sowie die Zylinderbleche untereinander verbunden bzw. verschweißt.

Aufgabe der vorliegenden Erfindung ist es, einen gattungsgemäßen Speicherbehälter anzugeben, bei dem die Verwendung des bisherigen Materials Chromnickel-Stahl reduziert wird, der darüber hinaus leichter und zudem kostengünstiger hergestellt werden kann.

Zur Lösung dieser Aufgabe wird ein Speicherbehälter, aufweisend einen Außenbehälter, einen oder mehrere, innerhalb des Außenbehälters angeordnete Innenbehälter und Zu- und Abführleitungen in den oder die Innenbehälter, vorgeschlagen, der dadurch gekennzeichnet ist, dass der oder wenigstens einer der Innenbehälter zumindest teilweise aus einer Kohlefaser und/oder einem Kohlefaser-verstärktem Material besteht und/oder mit einer Kohlefaser und/oder einem Kohlefaser-verstärktem Material verstärkt ist.

Unter dem Begriff "Kohlefaser-verstärktes Material" seien alle Materialien zu verstehen, die eine Kohlefaser aufweisen.

Durch die zumindest teilweise Verwendung einer Kohlefaser und/oder eines Kohlefaser-verstärkten Materials für den oder die Innenbehälter kann auf die Verwendung von Stahl, insbesondere von CrNi-Stahl zur Gänze oder zumindest teilweise verzichtet werden. Eine Mengenreduzierung des für die Herstellung eines Innenbehälters benötigten Stahles kann auch dann realisiert werden, wenn der Innenbehälter mit einer Kohlefaser und/oder einem Kohlefaser-verstärkten Material verstärkt wird.

Die Erfindung führt zu einer Verringerung der Abhängigkeit von Stahl sowie dessen steigenden Preisen. Sie ermöglicht darüber hinaus eine generelle Kosteneinsparung, da Kohlefaser-Materialien bzw. Kohlefaser-verstärkte Materialien mittlerweile günstiger hergestellt werden können als Stahl, insbesondere CrNi-Stahl. Speziell bei transportablen Speicherbehältern ist die mit der Realisierung der Erfindung erreichte Gewichtseinsparung von großer Bedeutung. Schlussendlich ermöglicht die Erfindung zudem die Einsparung von Ressourcen.

Weitere vorteilhafte Ausgestaltungen des erfindungsgemäßen Speicherbehälters, die Gegenstände der abhängigen Patentansprüche darstellen, sind dadurch gekennzeichnet, dass
- die Zu- und Abführleitung(en) zumindest teilweise aus einer Kohlefaser und/oder einem Kohlefaser-verstärktem Material besteht/bestehen und/oder mit einer Kohlefaser und/oder einem Kohlefaser-verstärktem Material verstärkt ist/sind,
- der oder wenigstens einer der Innenbehälter vollständig aus einer Kohlefaser und/oder einem Kohlefaser-verstärktem Material besteht und/oder mit einer Kohlefaser und/oder einem Kohlefaser-verstärktem Material verstärkt ist,
- ausschließlich der zylindrische Bereich des oder wenigstens eines der Innenbehälter vollständig aus einer Kohlefaser und/oder einem Kohlefaser-verstärktem Material besteht und/oder mit einer Kohlefaser und/oder einem Kohlefaser-verstärktem Material verstärkt ist,
- Behälterausschnitte mit Kohlefaser und/oder einem Kohlefaser-verstärktem Material verstärkt sind,
- Krafteinleitungspunkte, wie sie bspw. der Befestigung des Innenbehälters dienen, mit Kohlefaser und/oder einem Kohlefaser-verstärktem Material verstärkt sind,
- die Mittel zum Befestigen des oder der Innenbehälter, hierbei handelt es sich insbesondere um Aufhängebänder, aus Kohlefaser und/oder einem Kohlefaser-verstärktem Material bestehen, und
- sofern der oder wenigstens einer der Innenbehälter einen CrNi-Stahlkern aufweist, die Wanddicke eines aus Kohlefaser und/oder einem Kohlefaser-verstärktem Material bestehenden Innenbehälters in Abhängigkeit des Designdrucks und die Wanddicke des CrNi-Stahlkerns druckunabhängig einheitlich stark ausgeführt sind.

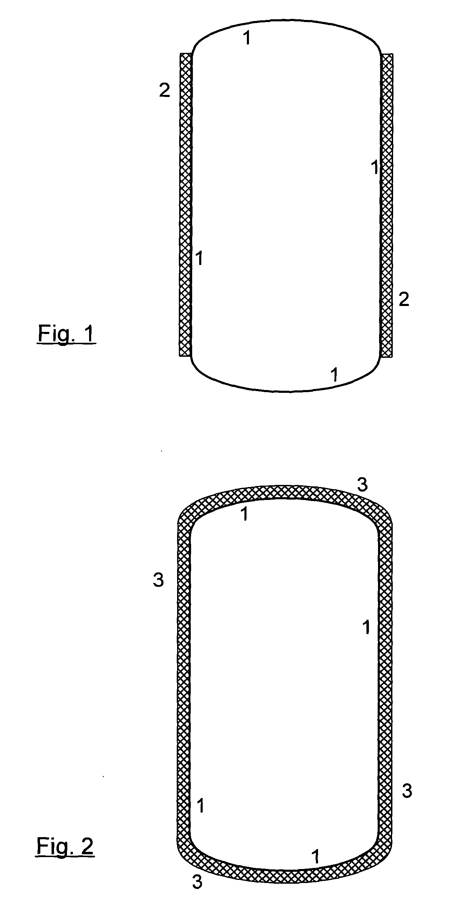

Der erfindungsgemäße Speicherbehälter sowie weitere Ausgestaltungen desselben, die Gegenstände der abhängigen Patentansprüche sind, seien nachfolgend anhand der in den **Figuren 1 und 2** dargestellten Ausführungsbeispiele näher erläutert.

Hierbei zeigen die beiden Figuren eine seitliche Schnittdarstellung durch zwei mögliche Ausführungsformen des erfindungsgemäßen Speicherbehälters. Diese Ausführungsformen werden lediglich in schematisierter Form dargestellt, weswegen auch auf eine Darstellung der erforderlichen Zu- und Abführleitungen in den Innenbehälter verzichtet ist. Des Weiteren ist jeweils nur der Innenbehälter des erfindungsgemäßen Speicherbehälters dargestellt. Auf eine Darstellung des Außenbehälters sowie der ggf. vorzusehenden Isolierung ist ebenfalls verzichtet, da deren Aufbau dem Fachmann hinlänglich bekannt sind.

**Figur 1** zeigt einen Innenbehälter 1, der aus einem Stahl, vorzugsweise aus CrNi-Stahl, gefertigt ist. Erfindungsgemäß ist nunmehr der zylindrische Bereich des Innenbehälters 1 mit einem Kohlefasermaterial bzw. einer Kohlefaserverstärkung 2 umgeben. Mittels dieser Konstruktion kann die Wandstärke im zylindrischen Bereich des Innenbehälters 1 deutlich, beispielsweise auf die Hälfte der ursprünglichen Wandstärke, reduziert werden. Eine derartige Konstruktion vermag die innerhalb des Innenbehälters 1 auftretenden Axialkräfte in ausreichender Weise aufzunehmen.

Bei der in der **Figur 2** dargestellten Innenbehälterkonstruktion ist der Innenbehälter 1 selbst lediglich aus einem dünnen Blech gefertigt. Dieses gewährleistet zuverlässig eine dauerhafte Dichtheit des Innenbehälters 1. Zusätzlich ist der Innenbehälter 1 erfindungsgemäß vollständig von einem Kohlefasermaterial bzw. einer Kohlefaserverstärkung 3 umgeben. Die Dicke des für den Innenbehälter 1 verwendeten Bleches kann gegenüber einem herkömmlichen, aus CrNi-Stahl hergestellten Innenbehälter nunmehr deutlich verringert werden.

Eine weitere Ausführungsform des erfindungsgemäßen Speicherbehälters kann dadurch realisiert werden, dass der Innenbehälter ausschließlich aus einer Kohlefaser und/oder einem Kohlefaser-verstärkten Material besteht. In diesem Falle könnte auf einen zusätzlichen Behälter aus einem Stahlmaterial oder einem dünnen Blech verzichtet werden.

Auch die in den Figuren 1 und 2 nicht dargestellten Zu- und Abführleitungen können - entsprechend einer weiteren vorteilhaften Ausgestaltung des erfindungsgemäßen Speicherbehälters - zumindest teilweise aus einer Kohlefaser und/oder einem Kohlefaser-verstärkten Material bestehen und/oder mit einer Kohlefaser und/oder einem Kohlefaser-verstärktem Material verstärkt sein.

In den Figuren 1 und 2 nicht dargestellt sind ferner Mittel zum Befestigungen des Innenbehälters in dem Außenbehälter. Diese werden vorteilhafterweise so ausgeführt, dass der Wärmeeintrag auf den Innenbehälter sowie das darin befindliche Medium minimiert werden kann. Üblicherweise kommen hierfür Bänder, an der der Innenbehälter aufgehängt ist, zur Anwendung. Den erfindungsgemäßen Speicherbehälter weiterbildend wird vorgeschlagen, dass diese Aufhängungen bzw. Bänder aus Kohlefaser und/oder einem Kohlefaser-verstärktem Material bestehen.

Neben den in den Figuren sowie vorstehend beschriebenen Ausführungsformen des erfindungsgemäßen Speicherbehälters sind eine Vielzahl weiterer, alternativer Innenbehälter-Konstruktionen realisierbar, die von dem erfindungsgemäßen Gedanken Gebrauch machen. So können bspw. Mischformen realisiert werden, bei denen die gewölbten Böden ausschließlich aus einer Kohlefaser und/oder einem Kohlefaser-verstärktem Material bestehen, während der zylindrische Bereich des Innenbehälters mit einer Kohlefaser und/oder einem Kohlefaser-verstärktem Material verstärkt ist.

Des Weiteren sei betont, dass der Erfindungsgedanke nicht nur bei Innenbehälter-Konstruktionen, wie sie in den Figuren dargestellt sind, Anwendung finden kann, sondern grundsätzlich bei allen denkbaren Innenbehälter-Bauformen.

## Patentansprüche

1. Speicherbehälter, aufweisend einen Außenbehälter, einen oder mehrere, innerhalb des Außenbehälters angeordnete Innenbehälter und Zu- und Abführleitungen in den oder die Innenbehälter, **dadurch gekennzeichnet, dass** der oder wenigstens einer der Innenbehälter zumindest teilweise aus einer Kohlefaser und/oder einem Kohlefaser-verstärktem Material (2, 3) besteht und/oder mit einer Kohlefaser und/oder einem Kohlefaser-verstärktem Material (2, 3) verstärkt ist.

2. Speicherbehälter nach Anspruch 1, **dadurch gekennzeichnet, dass** die Zu- und Abführleitung(en) zumindest teilweise aus einer Kohlefaser und/oder einem Kohlefaser-verstärktem Material besteht/bestehen und/oder mit einer Kohlefaser und/oder einem Kohlefaser-verstärktem Material verstärkt ist/sind.

3. Speicherbehälter nach Anspruch 1 oder 2, **dadurch gekennzeichnet, dass** der oder wenigstens einer der Innenbehälter vollständig aus einer Kohlefaser und/oder einem Kohlefaser-verstärktem Material (2, 3) besteht und/oder mit einer Kohlefaser und/oder einem Kohlefaser-verstärktem Material (2, 3) verstärkt ist.

4. Speicherbehälter nach einem der vorhergehenden Ansprüche 1 bis 3, **dadurch gekennzeichnet, dass** ausschließlich der zylindrische Bereich des oder wenigstens eines der Innenbehälter vollständig aus einer Kohlefaser und/oder einem Kohlefaser-verstärktem Material (2, 3) besteht und/oder mit einer Kohlefaser und/oder einem Kohlefaser-verstärktem Material (2, 3) verstärkt ist.

5. Speicherbehälter nach einem der vorhergehenden Ansprüche 1 bis 4, **dadurch gekennzeichnet, dass** Behälterausschnitte mit Kohlefaser und/oder einem Kohlefaser-verstärktem Material verstärkt sind.

6. Speicherbehälter nach einem der vorhergehenden Ansprüche 1 bis 5, **dadurch gekennzeichnet, dass** Krafteinleitungspunkte mit Kohlefaser und/oder einem Kohlefaser-verstärktem Material verstärkt sind.

7. Speicherbehälter nach einem der vorherigen Ansprüche 1 bis 6, **dadurch gekennzeichnet, dass** die Mittel zum Befestigen des oder der Innenbehälter aus Kohlefaser und/oder einem Kohlefaser-verstärktem Material bestehen.

8. Speicherbehälter nach einem der vorhergehenden Ansprüche 1 bis 7, aufweisend wenigstens einen Innenbehälter mit einem CrNi-Stahlkern, **dadurch gekennzeichnet, dass** die Wanddicke eines aus Kohlefaser und/oder einem Kohlefaser-verstärktem Material (2, 3) bestehenden Innenbehälters in Abhängigkeit des Designdrucks und die Wanddicke des CrNi-Stahlkerns druckunabhängig einheitlich stark ausgeführt sind.
